# EUROPEAN PATENT SPECIFICATION

(11) **EP 1 335 507 B1**
(45) Date of publication and mention of the grant of the patent: **14.09.2005**
(21) Application number: 02425043.3
(22) Date of filing: 31.01.2002
(51) Int. Cl.: H04B 10/00

(54) **Insulating method and device to obtain an excellent galvanic insulation between two low voltage electronic devices in an integrated opto-isolator**
Verfahren und Einrichtung zur hervorragenden galvanischen Isolierung zwischen zwei Niederspannungsschaltungen in einer intergrierten Opto-Isolator-Einrichtung
Methode et dispositif pour une excellente isolation galvanique entre deux circuits basse tension dans un isolateur optique

(43) Date of publication of application: 13.08.2003
(73) Proprietor: STMicroelectronics S.r.l., 20041 Agrate Brianza (Milano) (IT)
(72) Inventor: Saggio, Mario, 1-95021 Aci Castello (Catania) (IT); Coffa, Salvatore, 95030 Tremestieri Etneo (Catania) (IT); Frisina, Ferruccio, 95030 S. Agata Li Battiata (Catania) (IT)
(74) Representative: Botti, Mario

(56) References cited:
- EP-A- 0 318 883
- US-A- 4 438 447
- US-A- 4 730 330
- US-A- 4 871 224
- US-A- 5 629 534
- US-B1- 6 221 736
- US-B1- 6 255 229
- SOREF ET AL: "Vertically Integrated Silicon-on-Insulator Waveguides" IEEE PHOTONICS TECHNOLOGY LETTERS, vol. 3, no. 1, 1 January 1991 (1991-01-01), pages 22-24, XP002202439

## Description

### Field of Application

The present invention relates to a method for providing optimum galvanic isolation between two low-voltage electronic devices that are integrated on a semiconductor substrate.

More particularly, the invention relates to a method as above, whereby the electronic devices are optically coupled together.

The invention further relates to an isolation device providing optimum galvanic isolation between two low-voltage electronic devices.

### Prior Art

As the skilled ones in the art know well, there are many electronic applications where two electronic devices require to be completely galvanically isolated from each other.

The term galvanic isolation is used here to denote a condition of thorough mutual electrical isolation of the devices that, in the case here taken in consideration, can be two circuit portions A and B that are integrated on the same semiconductor substrate.

However, there are many instances where, beside a total electric insulation, an unrestricted communication of some other nature, such as optical communication, must be maintained between two devices.

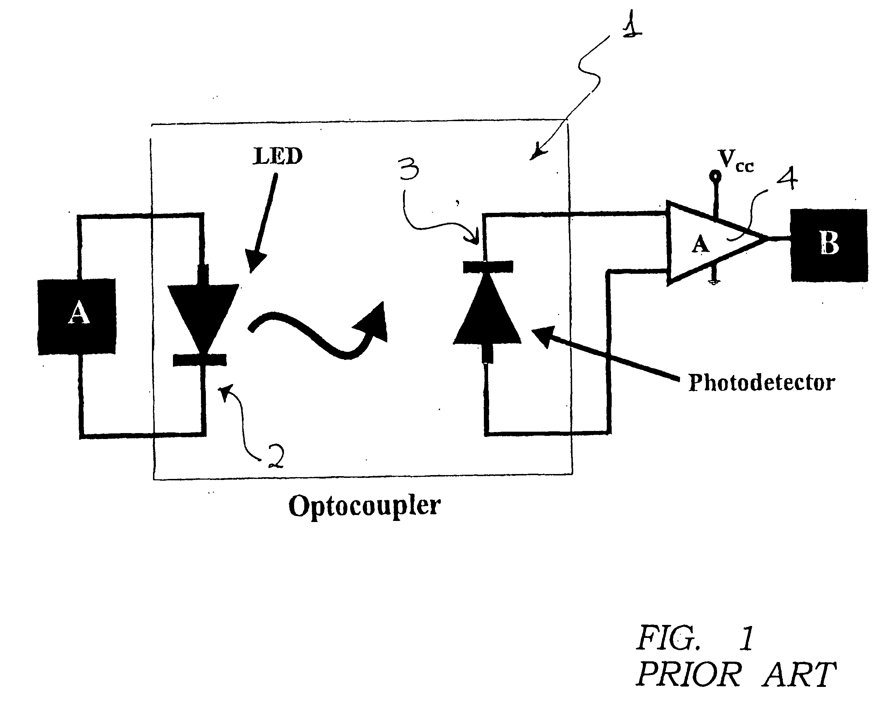

As an example, Figure 1 schematically shows an optical coupler 1 employed to galvanically isolate two circuit portions A and B that are in communication with each other.

One portion, A, includes a driver circuit arranged to drive a LED 2, while the other portion, B, includes a detector circuit associated with a light sensor 3 through a low-voltage buffer 4.

The LED 2 and light sensor 3 are parts of the optical coupler 1 and in optical communication with each other, at the same time as they are galvanically isolated from each other.

There exist several different types of galvanic isolation, which differ from each other by their function and the voltage ranges that they are designed to withstand.

Two such types of isolation can be recognized function-wise:
- the functional type, and
- the safety type.

A functional type of galvanic isolation is needed to ensure a proper electrical operation of the circuit portions A and B.

For example, if common mode rejection is to be provided between the low-voltage circuit portions A and B, these portions have to prosecute their operation, even when a strong difference of potential between their respective ground references GND is developed.

This potential difference may be in the range of 200 to 2500 V, depending on the device class, and is due to noise on the transmission lines. Also, the potential difference may show marked fluctuations in time, and hence high dV/dt.

Safety isolation is provided to applications where power circuit portions are coupled together, of which portions at least one is a high-voltage portion and another is a low-voltage portion in straight contact with a user. Examples of such applications include a battery charger and solid-state power switches. In these instances, additionally to ensuring that the potential difference is maintained, the isolation is to prevent the occurrence of shorts likely to harm the power portion.

It can be appreciated that with applications of this kind, both the safety and the device testing criteria must be far more stringent than for functional isolation alone.

For instance, Standard 950 by IEC (International Electrotechnical Commission) sets the conditions for guaranteeing a proper galvanic isolation. Standard IEC950 sets, among others, some conditions to observe as far as the physical distances that should be allowed between conductive parts in a device are concerned, and above all, the dielectric thickness that separates two parts of an integrated circuit.

In this context, devices are classed according to their admissible voltage ranges and the following quantities:
- Creepage Distance: the shortest distance, measured along an insulator surface, between two conductive parts or leads;
- Clearance Distance: the shortest distance between two conductive parts or leads in an area;
- Internal Clearance: the distance, measured through a dielectric, between any input and output circuit portions that are to sustain the rated potential difference for the insulator.

The first two of these quantities can be regarded as external, whereas the third is internal.

Table 1 below shows optimum values for these quantities depending on the different insulation classes A, B, C and D.

**Table 1**

| GROUP | External Creepage | External Clearance | Internal Clearance |
|---|---|---|---|
| | (mm) | (mm) | (mm) |
| A | 10.0 | 9.6 | 1 |
| B | 8.0 | 8.0 | 0.5 |
| C | 7.4 | 7.1 | 0.08 |
| D | 4.8 | 4.9 | 0.08 |

Note should be taken of that the Internal Clearance column refers to an isolation material that is a polymer film. With a material of higher electrical strength, the values can be lower.

Table 2 below shows voltage values that the isolation structure is to withstand both under test for one minute, and in steady-state operation; i.e., Table 2 shows working and peak voltages measured on testing which are relevant to the four isolation classes:

**Table 2**

| GROUP | V rms (1 min proof test) | Working Voltage, Peak (V) |
|---|---|---|
| A | 5000 | 1414 |
| B | 3750 | 850 |
| C | 2500 | 630 |
| D | 2500 | 566 |

Proposals for obtaining a good galvanic isolation are already known in the prior art. A method used since a long time provides light couplers that are not integrated with any of the circuit portions that they are to isolate.

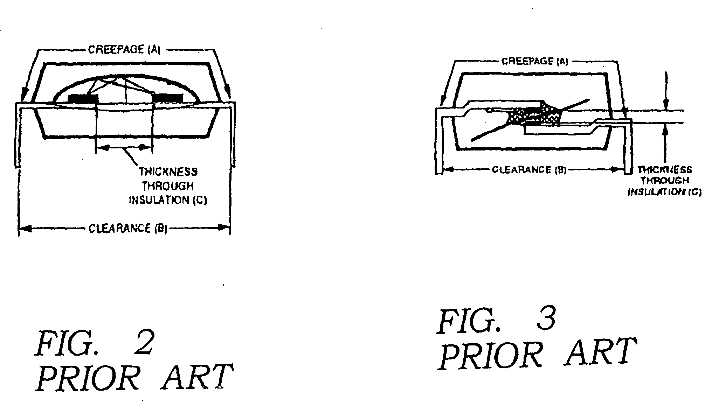

An example of this prior method is schematically shown in Figure 2, where the optical coupler comprises a LED and a light sensor performed by means of discrete devices, and where the package provides for the optical alignment of both devices. In addition, the LED and light sensor are formed with two different technologies: technology III-V for the LED, and a silicon phototransistor for the light sensor.

Where multiple communication channels, which are insulated from each other, are to be formed, the package has to screen off the light, such that light from the LED of a given transmission line will not strike the light sensor of any of the other transmission lines, e.g. line i+1.

This prior method has well-recognized disadvantages, as follows:
- discrete devices are used;
- the components are formed with two different technologies;
- optical alignment can only be achieved using a complex packaging construction; and
- multi-channel operation can only be provided at the expense of further package optimization.

A Further Known solution is disclosed in the US patent No. 5,629,534 and in the preamble of claim 1.

The underlying technical problem of this invention is to provide a method and isolation device for providing optimum galvanic isolation between two low-voltage electronic devices, which method and device should exhibit functional and structural features appropriate to optimize the optical coupling of the devices and overcome the limitations of the prior art.

### Summary of the Invention

The principle on which the invention stands is the one of using an integrated isolation structure that also includes an opto-electronic coupling device, such as a waveguide optical coupler.

Based on this principle, the technical problem is solved by a method as previously indicated and as defined in the characterizing part of Claim 1.

The invention further relates to an isolation device implementing the above method, as defined in Claim 5 foll.

The features and advantages of the method and the device according to the invention will be apparent from the following description of embodiments thereof, given by way of non-limitative examples with reference to the accompanying drawings.

In the drawings:

### Brief Description of the Drawings

Figure 1 shows a schematic view of an isolation device with optical coupling, according to the prior art.
Figure 2 shows a schematic vertical-section view through the package case of the isolation device shown in Figure 1.

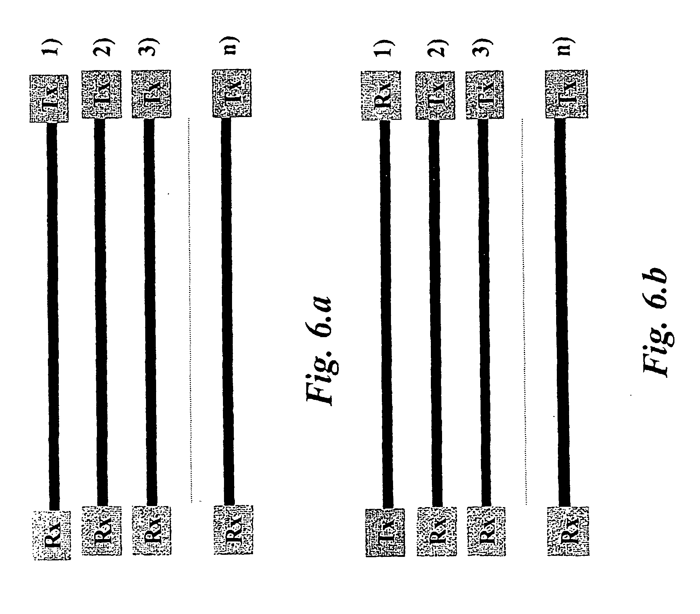

Figure 3 shows another schematic vertical cross-section view through the package case of the isolation device shown in Figure 1.

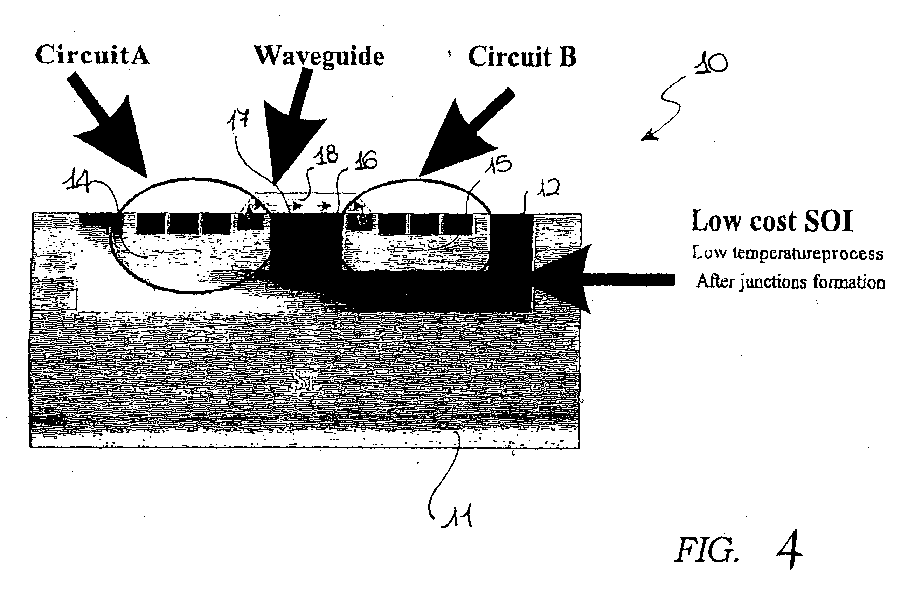

Figure 4 shows a schematic view of an isolation device with optical coupling, performed according to the invention.
Figure 5 shows a schematic view of a modified embodiment of an isolation device with optical coupling, performed according to the invention.
Figures 6a and 6b show schematic views of receive and transmit modules, respectively, of the inventive device.
Figure 7 show another schematic cross-section view of the device shown in Figure 5.

### Detailed Description

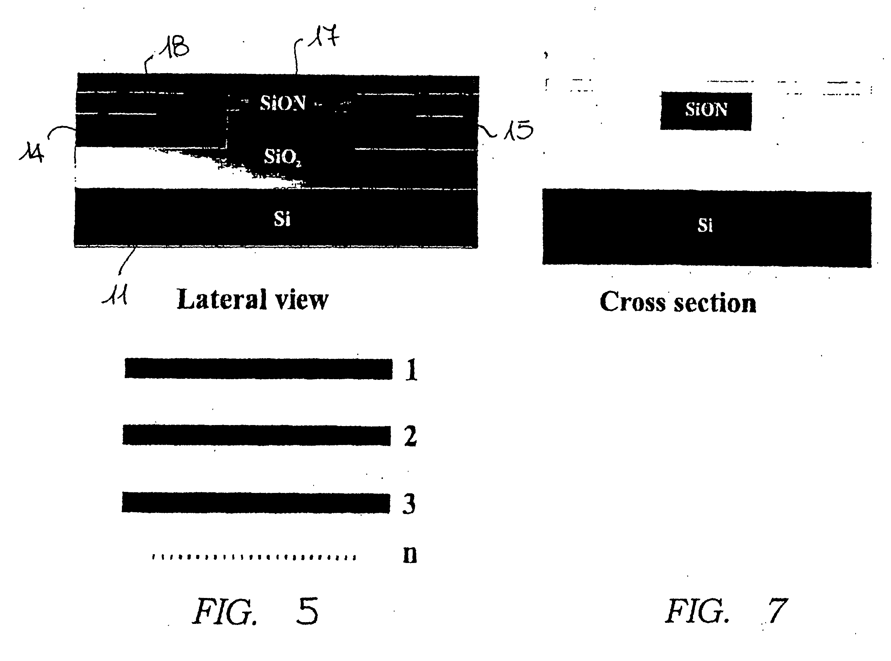

With reference to the drawings, in particular to the example shown in Figure 5 thereof, an opto-electronic isolation device according to this invention is generally shown at 10 in schematic form. This isolation device 10 is intended to provide optimum galvanic isolation between two electronic devices A, B operating on a low voltage.

The device 10 is essentially an integrated electronic structure that is fabricated in a semiconductor substrate 11, made out of silicon for example.

The device 10 is fabricated by a process comprising a sequence of steps that are typical of microelectronic technology. However, the process steps and the structures described here below are not exhaustive of a process for fabricating electronic integrated structures. Indeed, this invention can be accomplished in combination with several fabricating techniques currently employed in the integrated circuit industry, and only such current process steps necessary to an understanding of this invention will be discussed herein.

The cross-sectional views of portions of an integrated circuit under fabrication are not drawn to scale, but rather to highlight important features of the invention.

Provided on top of the substrate 11 is a dielectric isolation layer 12, e.g. of silicon oxide (SiO₂).

Regions 13 and 13' of a semiconductor material are formed on or embedded in the dielectric layer 12, and circuit portions A and B, galvanically isolated from each other, are formed in said regions 13, 13'.

More particularly, the first portion A may be a control or power type of electronic circuit integrated in the surface of region 13. The portion A would usually accommodate at least one LED or light-emitting diode and any associated drive circuitry.

Similarly, the second portion B may be a control or power type of electronic circuit integrated in the surface of region 13'. The portion B would usually accommodate an integrated light sensor and its receive circuitry.

The regions 13 and 13' are substantially islands provided on the surface of the dielectric layer 12, and on this account, they are truly isolated from each other. It can be seen in Figure 5 that a substantial region 16 of the dielectric layer 12 separates the island regions 13 and 13'.

The portions A and B are each formed in one of the respective regions 13 and 13', and are structurally independent and isolated by the region 16 of layer 12. However, these portions A and B are operatively linked together by that they must communicate with each other to exchange optical or opto-electronic signals, although they have always to guarantee their galvanic insulation.

Advantageously in this invention, a waveguide 17 is placed between the portions A and B in the device 10. This waveguide is effective to carry the light signals between the portions A and B, e.g. as disclosed in the European Patent Publication No. EP 1081812 by this Applicant. Of course, the optical path of transmission is bi-directional.

The waveguide 17 is formed on the surface of the isolating layer 12 in the region 16 between the portions A and B. However, there is no reason why the waveguide 17 could not be formed within the isolating layer 12, between the integrated portions A and B.

The waveguide 17 is bordered downwardly and laterally by the isolation layer 16, and is capped by a dielectric isolation layer 18, e.g. of silicon nitride.

In a preferred embodiment shown in Figure 5, the circuit portions A and B are formed on respective semiconductor islands 14 and 15, which are provided within an isolation region 19 formed in the substrate 11.

The overall structure, comprising the substrate 11, the isolation region 19, and the islands 14 and 15 made out of a semiconductor material, essentially form a SOI (Silicon On-Insulator) structure that can be provided at a moderate cost by using microelectronic circuit fabrication technologies known in this field. More particularly, and as shown in Figure 5, the greatest thickness W of the isolation layer beneath the islands 14, 15 is about 3 microns in commercially available BESOI wafers. Alternatively, greater thicknesses than 10 microns can be used for processes with low-temperature oxidizing porous silicon layers.

In the preferred embodiment shown in Figure 5, the waveguide 17 is formed in a trench 20 obtained in the isolation layer 19, specifically in the surface region 16 of the latter. This trench extends between the regions 14 and 15.

The trench 20 has an approximately rectangular cross-sectional shape and is filled with silicon oxy-nitride. It is capped with an isolation layer 21, e.g. of silicon oxide or TEOS, as more clearly shown in Figure 7.

The length L of the resulting waveguide may be a few tens of a micron.

Advantageously, the waveguide structure 17 may be provided with a set of successive layers that are isolated from one another so as to produce a sandwich structure or stack of n oxy-nitride layers interleaved with isolation layers, each functioning as a waveguide for a respective transmission channel. A multi-channel structure is thus obtained with a fully galvanic insulation.

The device of this invention includes receive modules Rx and transmit modules Tx on either sides of the waveguide 17, as shown in Figures 6a and 6b.

Summarizing, this is the equivalent of providing at least one LED and one light sensor in portion A, and at least one LED and one light sensor in portion B.

The galvanic isolation structure and method of this invention do solve the technical problem, and offer the advantages reviewed here below.

A major advantage is that the circuit portions A and B are completely isolated from each other from a galvanic standpoint, with the integrated waveguide, which is defined photolithographically in the device of this invention, providing for the transmission of the optical signal between A and B.

The waveguide forming process is consistent with the technologies for fabricating integrated circuits on semiconductor silicon.

The alignment of the light source represented by circuit portion A to the sensor represented by circuit portion B is made highly accurate by the lithographic resolution of the waveguide.

By allowing the waveguide to be a ply structure that provides multiple transmission channels, the device of this invention is made especially versatile and suitable for use in specialized applications where a multi-channel link between the source and the receiver is required.

Another advantage is that the receive and transmit modules Rx and Tx can be provided on either sides of the guide, as shown in Figure 6b.

Advantageously, the device of this invention can be conventionally packaged, because the package structure is no longer to double as an optical coupler.

## Claims

1. A method for providing an optimum galvanic isolation between two low-voltage electronic devices (A,B), with said devices (A,B) being optically coupled together, both said electronic devices (A,B) being integrated in respective portions of the same integrated structure (11,12,13,13'), structurally independent and galvanically isolated one from the other, **characterised in that** a waveguide (17) is integrated between said devices to couple them optically together, said waveguide (17) being formed of multiple layers interleaved with isolation layers to produce a multi-channel coupling structure which is totally laterally isolated.

2. A method according to Claim 1, **characterised in that** said waveguide is formed either on top of or within a dielectric material layer (12) separating said integrated portions (13,13').

3. A method according to Claim 1, **characterised in that** said devices include at least one LED in one portion and at least one light sensor in the other portion.

4. A method according to Claim 1, **characterised in that** said devices comprise at least one LED and one light sensor in one portion, and at least one LED and one light sensor in the other portion.

5. An isolation device providing optimum galvanic isolation between two low-voltage electronic devices (A,B), with said devices (A,B) being structurally independent and galvanically isolated one from the other but optically coupled together, **characterised in that** it comprises an opto-electronic integrated structure comprising a waveguide (17) formed between two separate circuit portions integrated in respective regions (13,13') of the same semiconductor substrate, said waveguide (17) being formed of multiple layers interleaved with isolation layers to produce a multi-channel coupling structure being totally laterally isolated.

6. A device according to Claim 5, **characterised in that** said waveguide (17) is formed in a dielectric layer (12), and that said respective separate regions (13,13') are embedded in said dielectric layer.

7. A device according to Claim 5, **characterised in that** said waveguide (17) is formed either on top of or within a dielectric material layer (12) separating said integrated portions (13,13').

8. A device according to Claim 5, **characterised in that** said waveguide (17) is of silicon oxy-nitride.

9. A device according to Claim 5, **characterised in that** said regions (13,13') and waveguide (17) are formed in a SOI structure.

## Patentansprüche

1. Verfahren zur Bereitstellung einer optimalen galvanischen Isolierung zwischen zwei elektronischen Niederspannungsbauelementen (A, B), wobei die Bauelemente (A, B) optisch miteinander verbunden sind, beide elektronische Bauelemente (A, B) in entsprechende Abschnitte derselben integrierten Struktur (11, 12, 13, 13') eingebunden sind, und strukturell unabhängig und galvanisch voneinander isoliert sind, **dadurch gekennzeichnet, dass** ein Wellenleiter (17) zwischen den Bauelementen integriert ist, um sie optisch miteinander zu verbinden, wobei der Wellenleiter (17) aus mehreren, durch dazwischengelegte Isolierschichten getrennte Schichten gebildet ist, um eine Mehrkanalverbindungsstruktur zu ergeben, welche seitlich vollständig isoliert ist.

2. Verfahren nach Anspruch 1, **dadurch gekennzeichnet, dass** der Wellenleiter entweder auf oder in einer dielektrischen Materialschicht (12) ausgebildet wird, welche die integrierten Abschnitte (13, 13') trennt.

3. Verfahren nach Anspruch 1, **dadurch gekennzeichnet, dass** die Bauelemente mindestens eine LED in einem Abschnitt und einen Lichtsensor im anderen Abschnitt umfassen.

4. Verfahren nach Anspruch 1, **dadurch gekennzeichnet, dass** die Bauelemente mindestens eine LED und einen Lichtsensor in einem Abschnitt, und mindestens eine LED und einen Lichtsensor im anderen Abschnitt umfassen.

5. Isolierbauelement, welches eine optimale galvanische Isolierung zwischen zwei elektronischen Niederspannungsbauelementen (A, B) bereitstellt, wobei die Bauelemente (A, B) strukturell voneinander unabhängig und galvanisch voneinander isoliert, aber optisch miteinander verbunden sind, **dadurch gekennzeichnet, dass** es eine opto-elektronische integrierte Struktur aufweist, welche einen Wellenleiter (17) umfasst, der zwischen zwei separaten Schaltungsabschnitten gebildet ist, welche ihrerseits in entsprechende Bereiche (13, 13') desselben Halbleitersubstrats integriert sind, wobei der Wellenleiter (17) aus mehreren, durch dazwischengelegte Isolierschichten getrennte Schichten gebildet ist, um eine Mehrkanalverbindungsstruktur zu ergeben, welche seitlich vollständig isoliert ist.

6. Bauelement nach Anspruch 5, **dadurch gekennzeichnet, dass** der Wellenleiter (17) in einer dielektrischen Schicht (12) ausgebildet wird, und dass die entsprechenden separaten Bereiche (13, 13') in der dielektrischen Schicht eingebettet sind.

7. Bauelement nach Anspruch 5, **dadurch gekennzeichnet, dass** der Wellenleiter (17) entweder auf oder in einer dielektrischen Materialschicht (12) ausgebildet ist, welche die integrierten Abschnitte (13, 13') trennt.

8. Bauelement nach Anspruch 5, **dadurch gekennzeichnet, dass** der Wellenleiter (17) aus Siliziumoxinitrid besteht.

9. Bauelement nach Anspruch 5, **dadurch gekennzeichnet, dass** die Bereiche (13, 13') und der Wellenleiter (17) in einer SOI-Struktur gebildet sind.

## Revendications

1. Procédé pour établir une isolation galvanique optimale entre deux dispositifs électroniques à basse tension (A,B), lesdits dispositifs (A,B) étant couplés optiquement entre eux, lesdits dispositifs (A,B) étant tous deux intégrés dans des parties respectives de la même structure intégrée (11,12,13,13'), en étant indépendants structurellement et isolés galvaniquement l'un de l'autre, **caractérisé en ce qu'**un guide d'ondes (17) est intégré entre lesdits dispositifs pour réaliser un couplage optique entre ces derniers, ledit guide d'ondes (17) étant formé de multiples couches imbriquées avec des couches isolantes pour produire une structure de couplage multicanaux, qui est totalement isolée latéralement.

2. Procédé selon la revendication 1, **caractérisé en ce que** ledit guide d'ondes est formé soit à la partie supérieure, soit à l'intérieur d'une couche d'un matériau diélectrique (12) séparant lesdites parties intégrées (13,13').

3. Procédé selon la revendication 1, **caractérisé en ce que** lesdits dispositifs incluent au moins une diode LED dans une partie et au moins un détecteur de lumière dans l'autre partie.

4. Procédé selon la revendication 1, **caractérisé en ce que** lesdits dispositifs comprennent au moins une diode LED et un détecteur de lumière dans une partie et au moins une diode LED et un détecteur de lumière dans l'autre partie.

5. Dispositif d'isolation établissant une isolation galvanique optimale entre deux dispositifs électroniques à basse tension (A,B), lesdits dispositifs (A,B) étant structurellement indépendants et isolés galvaniquement l'un de l'autre, mais couplés optiquement, **caractérisé en ce qu'**il comprend une structure intégrée optoélectronique comprenant un guide d'ondes (17) formé entre deux parties de circuit séparées intégrées dans des régions respectives (13,13') du même substrat semiconducteur, les guides d'ondes (17) étant formés de couches multiples imbriquées avec des couches isolantes pour produire une structure de couplage multicanaux, qui est totalement isolée latéralement.

6. Dispositif selon la revendication 5, **caractérisé en ce que** ledit guide d'ondes (17) est formé dans une couche diélectrique (12), et que lesdites régions respectives séparées (13,13') sont enchâssées dans ladite couche diélectrique.

7. Dispositif selon la revendication 5, **caractérisé en ce que** ledit guide d'ondes (17) est formé soit sur la partie supérieure, soit à l'intérieur d'une couche de matériau diélectrique (12) séparant lesdites parties intégrées (13,13').

8. Dispositif selon la revendication 5, **caractérisé en ce que** ledit guide d'ondes (17) est formé d'oxynitrure de silicium.

9. Dispositif selon la revendication 5, **caractérisé en ce que** lesdites régions (13,13') et les guides d'ondes (17) sont formés dans une structure SOI.
